# EUROPÄISCHE PATENTANMELDUNG

(11) **EP 3 763 795 A1**
(43) Veröffentlichungstag der Anmeldung: **13.01.2021**
(21) Anmeldenummer: 20180548.8
(22) Anmeldetag: 17.06.2020
(51) Int. Cl.: C09J 7/10, C09J 183/04

(54) **FEUCHTIGKEITSVERNETZBARE, DIMENSIONSSTABILE POLYMERMASSE**

(30) Priorität: 08.07.2019 DE 102019209987; 19.12.2019 DE 102019220101
(71) Anmelder: tesa SE, 22848 Norderstedt (DE)
(72) Erfinder: HEIDSIECK, Sven, 20251 Hamburg (DE); KETTLING, Friederike, 22299 Hamburg (DE); PAPENBROOCK, Marten, 22417 Hamburg (DE); ZEYSING, Björn, 22393 Hamurg (DE); WINKLER, Tobias, 22145 Hamburg (DE); GRITTNER, Norbert, 22459 Hamburg (DE)
(74) Vertreter: tesa SE

(57) **Zusammenfassung**

Es soll eine mit Luftfeuchtigkeit aushärtbare Masse zur Verfügung gestellt werden, welche sich auf einfache Weise und sehr positionsgenau applizieren lässt und nach Aushärtung hohe Klebkräfte erbringt. Dies gelingt mit einer chemisch vorvernetzten und mit Feuchtigkeit weiter vernetzbaren, autohäsiven Polymermasse zur Verwendung als auf ein Substrat applizierbarer Schichtkörper, wobei die Polymermasse
mindestens ein Polymer mit mindestens zwei terminalen Silylgruppen gemäß der Formel (1)

Si(R¹)ₐ(R²)_{b} (1),

worin
die Reste R¹ voneinander unabhängig für eine Alkyl-, Alkenyl- oder Arylgruppe oder für ein Wasserstoffatom stehen,
die Reste R² für eine mit Wasser abspaltbare Gruppe stehen und
b = 1, 2 oder 3 und a = 3 - b ist;
und mindestens einen Kondensationskatalysator
umfasst. Gegenstand der Erfindung ist auch die Verwendung einer derartigen Polymermasse zur Herstellung von permanenten Verklebungen.

## Beschreibung

Die Erfindung liegt allgemein auf dem technischen Gebiet der Polymermassen, wie sie in Haushalt und Technik für vielfältige Anwendungen eingesetzt werden. Konkreter betrifft die Erfindung eine vorvernetzte und mit Feuchtigkeit weiter vernetzbare, autohäsive Polymermasse. Diese ist insbesondere hinreichend dimensionsstabil, um als Schichtkörper auf ein Substrat appliziert und beispielsweise in Bauanwendungen eingesetzt werden zu können.

Polymersysteme, die über reaktive Silylgruppen verfügen, sind bekannt, z.B. als Basis für Dicht- und Klebstoffformulierungen. Sie zeichnen sich durch ihre gute Adhäsion auf vielen Oberflächen aus. Insbesondere sind sie in der Lage, eine sehr stabile und dauerhafte Anbindung an Substratoberflächen auszubilden.

Die Polymere sind in der Lage, entweder unter dem Einfluss von Feuchtigkeit aus der Umgebung oder vermittelt durch zugesetzte Vernetzer bereits bei Raumtemperatur Kondensationsreaktionen miteinander einzugehen. Je nach Gehalt an reaktiven Silylgruppen und deren Aufbau bilden sich dabei hauptsächlich langkettige Polymere mit thermoplastischen Eigenschaften, eher weitmaschige, dreidimensionale Netzwerke mit hauptsächlich elastomeren Eigenschaften oder hochvernetzte Systeme mit duroplastischen Eigenschaften.

Die Polymere weisen ein organisches Grundgerüst, z.B. ein Polyurethan-, Polyester- oder Polyether-Grundgerüst auf oder basieren auf einem Silikon-Grundgerüst. Allen hier interessierenden Systemen ist gemein, dass die Polymere über terminale Silylgruppen verfügen, die ihrerseits entweder OH-Gruppen oder mit Wasser abspaltbare Gruppen, z.B. Alkoxy- oder Acyloxygruppen tragen.

Polymere mit Silylgruppen an den Termini oder in einer Seitenkette werden beispielsweise in EP 1 396 513 A1 beschrieben. Die Silylgruppen mit ihren abspaltbaren Substituenten werden der Schrift zufolge durch Addition eines Hydrosilans an endständige Doppelbindungen des Gerüstpolymers, durch Reaktion von Isocyanatosilanen mit Hydroxylgruppen des Polymers, durch Umsetzung von aktive Wasserstoffatome enthaltenden Silanen mit Isocyanat-funktionalisierten Polymeren oder durch Reaktion von Mercaptosilanen mit endständigen Doppelbindungen des Polymers eingeführt. Die derart funktionalisierten Polymere sind Basis von Zusammensetzungen, die als Kleb- oder Dichtstoffe verwendet werden.

WO 2011/051385 A2 hat eine härtbare Zusammensetzung zum Gegenstand, die folgende Komponenten umfasst:
a) mindestens einen Polyether und/oder mindestens einen Polyacrylsäureester mit mindestens einer Endgruppe -Aₙ-R-SiXYZ,
   worin A eine zweibindige Bindegruppe, R ein zweibindiger, gegebenenfalls ein Heteroatom enthaltender Kohlenwasserstoffrest mit 1-12 C-Atomen, und
   X, Y, Z unabhängig voneinander C₁-C₈-Alkyl, C₁-C₈-Alkoxy oder C₁-C₈-Acyloxyreste sind, wobei m8indestens einer der Reste eine C₁-C₈-Alkoxy- oder C₁-C₈-Acyloxygruppe ist, und n 0 oder 1 ist; sowie
b) mindestens eine zinnorganische Verbindung,
c) mindestens eine Verbindung, die frei von Zinn- und Siliziumatomen ist und die mindestens zwei Funktionen aufweist, die jeweils ausgewählt sind aus Carboxy-, Carbonyl-, Hydroxygruppen sowie Stickstoffatomen, die Bestandteil eines Ringsystems mit aromatischem Charakter sind.

Die Zusammensetzung soll eine längere Verarbeitungsphase bei nachfolgend kurzer Durchhärtungszeit ermöglichen.

Gegenstand von WO 2009/130298 A1 ist ein Verfahren zur Herstellung eines silylierten Polyurethans, umfassend:
(A) das Umsetzen
   a. mindestens einer Polyolverbindung mit einem Molekulargewicht von 4000 - 20000 Dalton mit
   b. einem Diisocyanat bei einem stöchiometrischen Überschuss der Diisocyanatverbindung gegenüber den OH-Gruppen der Polyolverbindungen, wodurch ein Polyurethan-Prepolymer gebildet wird, das Isocyanat-terminiert ist; und
(B) das Umsetzen des Polyurethan-Prepolymers mit einem oder mehreren OHterminierten Silanen der Formel

HO-R³-C(O)-N(R⁴)-R-Si(R¹)ₘ(OR²)₃₋ₘ,

worin m 0, 1 oder 2 ist, R¹ und R² Alkylreste mit 1 bis 4 Kohlenstoffatomen, R³ ein divalenter organischer Rest mit 1 bis 10 Atomen ausgewählt aus C, N, S und/oder O in der Kette ist, R⁴ ein Wasserstoffatom oder ein Alkylrest mit 1 bis 12 Kohlenstoffatomen ist und R eine difunktionelle organische Gruppe ist, um die Isocyanatgruppen des Prepolymers mit dem vorstehenden Silan zu verkappen.

Bei den über reaktive Silylgruppen vernetzenden Polymersystemen kann zwischen einkomponentigen und zweikomponentigen Zusammensetzungen unterschieden werden.

Einkomponentige Systeme weisen in der Regel mehrere hydrolysierbare Silylgruppen auf. Die derart funktionalisierten Polymere resultieren in der Regel aus der Reaktion eines OHterminierten Polymers mit einem Silan-Vernetzer, der mehrere mit Wasser abspaltbare Gruppen aufweist. Diese Reaktion findet unter Ausschluss von Feuchtigkeit, also auch schon beim bloßen Mischen oder nach dem Abfüllen der Mischung in luftdichten Kartuschen, statt, sie setzt aber die Anwesenheit eines Kondensationskatalysators voraus.

Wird das nunmehr "endgecappte" Polymer appliziert, diffundiert Wasser aus der Umgebungsluft hinein und initiiert die eigentliche Vernetzungsreaktion, die unter Hydrolyse der hydrolysierbaren Silylgruppen und anschließender Kondensation der so entstandenen Si-OH-Gruppen zu einem Netzwerk verläuft.

Bei zweikomponentigen Systemen liegt das Si-OH-terminierte Polymer als eine erste Komponente vor, während der Silan-Vernetzer getrennt davon zusammen mit einem Kondensationskatalysator als zweite Komponente bereitgehalten wird. Sobald die beiden Komponenten zusammengebracht werden, findet eine Vernetzung der Polymere durch vom Vernetzer vermittelte Kondensationsreaktionen statt. Diese Vernetzungsreaktion benötigt keine hinzutretende Feuchtigkeit.

Besondere Aufmerksamkeit erfahren in dem hier beschriebenen Umfeld häufig Silikonbasierte Polymere, die sich insbesondere durch ihre Beständigkeit gegenüber äußeren Einflüssen wie Temperatur und Niederschlag auszeichnen. Deshalb werden sie häufig auch im Baubereich für Montageanwendungen eingesetzt. Hierbei werden vielfach sehr dicke Klebschichten bzw. Klebebänder benötigt, nicht zuletzt um die geforderten hohen Klebfestigkeiten zu erreichen.

Unter den Silikon-basierten Systemen unterscheidet man zwischen kaltvernetzenden und warmvernetzenden Silikonmassen. Erstere sind als RTV-Silikonmassen bekannt, wobei "RTV" für "room temperature vulcanization" bzw. "raumtemperaturvernetzend" steht. Die zweitgenannten Massen werden als HTV-Silikonmassen bezeichnet, wobei "HTV" für "high temperature vulcanization" bzw. "hochtemperaturvernetzend" steht. RTV-Systeme werden oft bevorzugt, weil ihre Verwendung nicht mit der Anwendung erhöhter Temperaturen verbunden ist und somit die zu verklebenden oder abzudichtenden Substrate keinen derartigen Einflüssen aussetzt. Es werden RTV1-Systeme und RTV2-Systeme unterschieden, wobei RTV1-Massen entsprechend dem vorstehend beschriebenen Mechanismus für einkomponentige Systeme vernetzen und RTV2-Massen entsprechend dem Mechanismus für zweikomponentige Systeme.

WO 2012/119940 A1 hat eine raumtemperaturvernetzende Organopolysiloxan-Zusammensetzung zum Gegenstand, die bereits im unvernetzten Zustand Festigkeit aufweist und folgende Bestandteile umfasst:
a) ein Organopolysiloxan mit einer Viskosität von mindestens 1000 mPas bei 25 °C und mindestens zwei Si-gebundenen Hydroxygruppen und/oder Si-gebundenen hydrolysierbaren Gruppen;
b) gefälltes Calciumcarbonat als Füllstoff;
c) einen geeigneten Katalysator;
d) einen Vernetzer, der geeignet ist, unter Katalyse durch c) mit Komponente a) zu reagieren; und optional
e) einen oder mehrere Rheologiemodifizierer;
f) bis zu 10 Gew.-% einen oder mehrere Verlängerer oder Weichmacher;
wobei Komponente b) in einem Anteil von 50 bis 70 Gew.-% der Gesamtzusammensetzung vorhanden ist.

WO 2014/086638 A1 beschreibt eine ein- oder zweikomponentige Silikonformulierung, die
a) mindestens ein vernetzbares Diorganopolysiloxan;
b) mindestens ein oligomeres Siloxan als Vernetzer für das Diorganopolysiloxan, wobei das oligomere Siloxan ein Kondensationsprodukt von monomeren Silanvernetzern ist; und
c) mindestens ein funktionalisiertes Oligodimethylsiloxan
umfasst.

Die Zusammensetzung soll sich insbesondere als elastischer Kleb- oder Dichtstoff, insbesondere in den Bereichen Automobil, Solar, Fassadenbau, Isolierglas, Fensterglas oder allgemein für den Bau eignen.

WO 2007/009871 A2 offenbart eine Heißschmelz-Beschichtungs-/Klebmasse enthaltend:
A eine Siloxanpolymerzusammensetzung umfassend
   a) ein Organopolysiloxan, welches mindestens zwei Gruppen ausgewählt aus
      i. Si-gebundenen Alkenylgruppen oder
      ii. Si-gebundenen Hydroxygruppen und/oder hydrolysierbaren Gruppen
      umfassen kann;
   b) einen oder mehrere Füllstoffe;
      und ein Vernetzungssystem umfassend
   c) einen geeigneten Katalysator und gegebenenfalls
   d) zur Reaktion mit a) unter Katalyse durch c) geeignete Vernetzer; sowie
      eine oder beide der Komponenten B und C, worin
B ein oder mehrere Heißschmelzharze darstellt und
C ein oder mehrere Wachse mit einer Schmelztemperatur zwischen 40 und 200 °C und/oder ein organisches Harz mit einem viskositätsmittleren Molekulargewicht von 200 bis 6000 und einem Erweichungspunkt von 0 bis 150 °C darstellt;
wobei der Gesamtanteil der Komponenten B und/oder C an der Zusammensetzung von 2 bis 60 Gew.-% beträgt.

Gängige polymerbasierte Zusammensetzungen, die über reaktive Silylgruppen aushärten und ein Eigenschaftsprofil derart aufweisen, dass sie sich zur Herstellung von klebenden Verbindungen zwischen zwei Substraten eignen, sind pastöse Gemische und weisen keine oder nur eine sehr geringe Dimensionsstabilität auf. Sie eignen sich daher nicht für die Anwendung als oder in einem Schichtkörper, insbesondere nicht als Klebmasse für ein Klebeband. Eine Masse ohne ausreichende Kohäsion bzw. Dimensionsstabilität würde zerfließen oder ausgequetscht werden. Zudem wäre das rückstandslose Entfernen eines Releaseliners und allgemein das rückstandslose Abwickeln z.B. von einer Rolle nicht möglich.

Auf der anderen Seite besteht ein großes Interesse an mit Luftfeuchte aushärtenden Klebmassen, die sich bequem applizieren lassen und nach ihrer Vernetzung hohe Klebfestigkeiten aufweisen.

Aufgabe der Erfindung ist es daher, eine mit Luftfeuchtigkeit aushärtbare Masse zur Verfügung zu stellen, welche sich auf einfache Weise und sehr positionsgenau applizieren lässt und nach Aushärtung hohe Kräfte übertragen kann.

Der Lösung der Aufgabe liegt der Gedanke zugrunde, eine über reaktive Silylgruppen vernetzende Masse zur Verfügung zu stellen, die sich stufenweise vernetzen lässt.

Ein erster und allgemeiner Gegenstand der Erfindung ist eine chemisch vorvernetzte und mit Feuchtigkeit weiter vernetzbare, autohäsive Polymermasse zur Verwendung als auf ein Substrat applizierbarer Schichtkörper, die mindestens ein Polymer mit mindestens zwei terminalen Silylgruppen gemäß der Formel (1)

Si(R¹)ₐ(R²)_{b} (1),

worin die Reste R¹ voneinander unabhängig für eine Alkyl-, Alkenyl- oder Arylgruppe oder für ein Wasserstoffatom stehen,
die Reste R² für eine mit Wasser abspaltbare Gruppe stehen und
b = 1, 2 oder 3 und a = 3 - b ist;
umfasst.

Unter einem "auf ein Substrat applizierbaren Schichtkörper" wird ein zu einer Schicht ausgeformtes Material verstanden, das seine Form und Dimensionen beim Aufbringen auf ein Substrat ohne größere äußere Beeinflussung im Wesentlichen beibehält. Darüber hinaus ist der Schichtkörper bevorzugt auf sich selbst aufwickelbar, ggf. unter Verwendung eines Releaseliners. Die Eignung einer erfindungsgemäßen Polymermasse zur Verwendung in einem derartigen Schichtkörper setzt daher voraus, dass die Masse hinreichend dimensionsstabil ist, um appliziert, aber auch aufgewickelt, gestapelt oder anderweitig gepackt oder prozessiert zu werden, ohne dabei auszufließen oder ausgequetscht zu werden. Zudem ist die Masse, obwohl schon vorvernetzt, durch Feuchtigkeit, beispielsweise Luftfeuchtigkeit, weiter vernetzbar, indem es zur Hydrolyse der Silylgruppen und nachfolgender Kondensation der daraus entstandenen Si-OH-Gruppen mit anderen Si-OH- oder hydrolysierbaren Gruppen zweier oder mehrerer Makromoleküle kommt.

Unter einer "Polymermasse" wird eine Zusammensetzung verstanden, die zu einem signifikanten und hinsichtlich ihrer Eigenschaften relevanten Anteil ein oder mehrere Polymere enthält. Bevorzugt beträgt der Anteil der Gesamtheit aller Polymere mit mindestens zwei terminalen Silylgruppen gemäß der Formel (1) (wobei diese Polymere im Folgenden auch als "Polₛᵢₗ" bezeichnet werden) an der erfindungsgemäßen Polymermasse mindestens 15 Gew.-%, stärker bevorzugt mindestens 20 Gew.-%, besonders bevorzugt mindestens 25 Gew.-%, insbesondere mindestens 30 Gew.-%, beispielsweise mindestens 35 Gew.-%.

Unter "chemisch vorvernetzt" wird verstanden, dass zwischen zumindest einigen der ursprünglich zur Herstellung der Polymermasse verwendeten Makromoleküle bereits eine unter Ausbildung chemischer Bindungen verlaufende Verknüpfung stattgefunden hat, die sich in einer erhöhten Kohäsion gegenüber den völlig unvernetzt nebeneinander vorliegenden, zur Herstellung der Polymermasse vorgesehenen Makromolekülen äußert. Diese Vernetzung ist aber noch nicht abgeschlossen, weshalb die Polymermasse noch weiter vernetzbar ist. Die chemische Vorvernetzung kann über einen dafür vorgesehenen Hilfsstoff und/oder eine initiale Reaktion einzelner Makromoleküle miteinander erfolgt sein. Anstelle von "chemisch vorvernetzt" kann auch der Ausdruck "chemisch teilvernetzt" verwendet werden.

Das Ausmaß der Vernetzung der Polymermasse determiniert u.a. den Quotienten aus Verlustmodul (G") und Speichermodul (G'), der als tan δ bezeichnet wird. Je stärker eine Polymermasse vernetzt ist, desto kleiner wird dieser Quotient; im Punkt der maximalen Vernetzung erreicht er für die betreffende Masse sein Minimum und die Masse damit ihre stärkste Annäherung an die Eigenschaften eines elastischen Festkörpers.

Bevorzugt ist der Quotient aus Verlustmodul (G") und Speichermodul (G') (tan δ) einer erfindungsgemäßen Polymermasse mindestens doppelt so groß, stärker bevorzugt mindestens 2,5mal so groß und insbesondere mindestens 3mal so groß wie das für diese Masse unter ansonsten gleichen Bedingungen erreichbare Minimum des tan δ. Mit anderen Worten ist die Masse also nur zu einem bestimmten Teil vernetzt und kann aus sich selbst heraus, d.h. insbesondere ohne weiteren Zusatz von Vernetzern, bis zu dem für sie erreichbaren tan δ-Minimum weiter vernetzen. Dies impliziert vorteilhaft ein relevantes Fließvermögen der Masse, d.h. einen signifikanten Anteil an viskosem Fließvermögen, was wiederum dazu führt, dass die Masse zu einem gewissen Maß auf ein Substrat auffließen und dieses somit benetzen kann. Die Masse weist daher eine Anfassklebrigkeit, einen so genannten "Tack", auf, der dafür sorgt, dass die Masse im lediglich vor- bzw. teilvernetzten Zustand in der Ausprägung ihrer Eigenschaften einer Haftklebmasse ähnelt und dementsprechend vorteilhaft auch so angewendet werden kann.

Unter "mit Feuchtigkeit weiter vernetzbar" wird verstanden, dass die chemisch vorvernetzte Polymermasse unter der Einwirkung von Wasser, insbesondere nur unter der Einwirkung von Luftfeuchtigkeit, unter Ausbildung chemischer Bindungen (weiter) vernetzen kann, wodurch es zu einem gegenüber dem vorvernetzten Zustand weiteren Kohäsionsaufbau innerhalb der Masse kommt.

Unter "autohäsiv" wird verstanden, dass der Polymermasse eine wahrnehmbare Eigenklebrigkeit innewohnt und sie somit an technisch üblichen Werkstoffoberflächen bei einem gewissen Andruck eine sofortige Haftung aufbaut, auf diesen also eine technisch relevante Klebrigkeit bzw. Tack aufweist. Der Begriff "autohäsiv" wird vorliegend als unterscheidend zu einer "Haftklebmasse" verstanden, die ihre Haftklebrigkeit permanent aufweist, während die erfindungsgemäße Polymermasse ihre im (nur) vorvernetzten Zustand vorhandene Eigenklebrigkeit durch die Weitervernetzung weitgehend verliert, ohne allerdings ihre vor der Weitervernetzung aufgebaute Adhäsion zu den Substraten zu verlieren.

Die erfindungsgemäße Polymermasse lässt sich auch als selbsttragende Polymermasse bezeichnen. Sie kann wie beschrieben als an sich dimensionsstabiler Schichtkörper verwendet werden. In diesem Sinne kann die Masse als solche den Schichtkörper bilden, sie kann aber auch als eine Schicht in einem Mehrschichtaufbau fungieren. Bevorzugt ist die erfindungsgemäße Polymermasse eine chemisch vorvernetzte und mit Feuchtigkeit weiter vernetzbare, autohäsive Polymermasse zur Verwendung in einem Klebeband. Die Masse ist daher insbesondere hinreichend dimensionsstabil, um bei üblichen Verwendungen oder Lagerungsvorgängen eines Klebebandes nicht auszufließen oder ausgequetscht zu werden, z.B. beim Aufbringen des Klebebandes auf ein zu verklebendes Substrat und beim Aufrollen oder Aufwickeln des Klebebandes zu einer Rolle oder Spule. Das Klebeband ist besonders bevorzugt ein strukturelles Klebeband bzw. ein Klebeband zur Herstellung struktureller Verklebungen.

Erfindungsgemäß umfasst die Polymermasse mindestens ein Polymer mit mindestens zwei terminalen Silylgruppen gemäß der Formel (1).

Die mit Wasser abspaltbaren Reste R² gemäß der Formel (1) sind bevorzugt ausgewählt aus der Gruppe bestehend aus Alkoxy-, Acyloxy-, Amino-, Enoxy- und Ketoximgruppen; besonders bevorzugt sind sie ausgewählt aus der Gruppe bestehend aus Methoxy-, Ethoxy-, Methylethylketoxim- und Methylisobutylketoximgruppen.

Die Variable b gemäß Formel (1) ist bevorzugt 2 oder 3, insbesondere 3.

Die Reste R¹ gemäß der Formel (1) sind bevorzugt ausgewählt aus der Gruppe bestehend aus Methyl-, Ethyl-, Phenyl- und Vinylgruppen.

Bevorzugt sind die terminalen Silylgruppen gemäß der Formel (1) unabhängig voneinander ausgewählt aus der Gruppe bestehend aus Vinyldimethoxysilyl-, Vinyldiethoxysilyl-, Methyldimethoxysilyl-, Methyldiethoxysilyl-, Trimethoxysilyl-, Triethoxysilyl-, Methylbis(methylethylketoxim)silyl-, Tris(Methylethylketoxim)silyl-, Vinylbis(methylethylketoxim)silyl-, Vinylbis(methylisobutylketoxim)silyl-, Methylbis(methylisobutylketoxim)silyl- und Tris(Methylisobutylketoxim)silylgruppen.

Das Grundgerüst des Polymers mit mindestens zwei terminalen Silylgruppen gemäß der Formel (1) (Polₛᵢₗ) ist bevorzugt ausgewählt aus der Gruppe bestehend aus Polyethern, Polyurethanen, Polysiloxanen, Polyharnstoffen, Polyacrylaten, Polyolefinen und Polyestern sowie Copolymeren aus diesen.

Besonders bevorzugt ist das Polymer Polₛᵢₗ ein Organopolysiloxan, insbesondere ein Organopolysiloxan basierend auf Siloxan-Einheiten gemäß der Formel (2)

(R"₃SiO_{1/2})ₙ(R'₂SiO)ₘ(R'SiP_{3/2})ₒ(SiO₂)ₚ (2),

worin
- die Reste R" unabhängig voneinander für eine Alkyl-, Alkenyl-, Aryl-, Alkoxy- oder Ketoximgruppe oder für ein Wasserstoffatom stehen;
- die Reste R' unabhängig voneinander für Alkyl-, Aryl- oder Alkenylreste stehen;
- n ≥ 2, m > 0 sowie o, p ≥ 0 gilt; und
- mindestens zwei der Siloxan-Einheiten (R"₃SiO_{1/2}) den vorstehend beschriebenen terminalen Silylgruppen gemäß der Formel (1) entsprechen.

Die Formel (2) ist keine Strukturformel und gibt insofern nur die Zusammensetzung des Organopolysiloxans aus den Siloxan-Einheiten, nicht jedoch deren Verknüpfung untereinander wieder.

In einer Ausführungsform ist die erfindungsgemäße Polymermasse erhältlich durch Mischen einer Zusammensetzung umfassend:
- mindestens ein Polymer Pol1,
   dessen Termini voneinander unabhängig jeweils von einer Silylgruppe gemäß der Formel (1) gebildet werden,
- mindestens ein Polymer Pol2,
   das mindestens zwei terminale, Si-gebundene OH-Gruppen aufweist;
- mindestens ein Organosilan und/oder mindestens ein Organooligosiloxan,
   jeweils enthaltend mindestens drei Si-gebundene, mit Wasser abspaltbare Gruppen; und
- mindestens einen Kondensationskatalysator.

Bevorzugt ist das Polymer Pol1 ein Diorganopolysiloxan gemäß der Formel (3)

(R²)_{b}(R¹)ₐSi-O-(SiR'₂-O)ₘ-Si(R¹)ₐ(R²)_{b} (3),

worin die Reste R' die bei der Formel (2) angegebene Bedeutung haben, m > 0 gilt und R¹, R², a und b die Bedeutung gemäß der Formel (1) haben. Grundsätzlich können die Reste R' in allen denkbaren und chemisch möglichen Konstellationen über das Diorganopolysiloxan verteilt sein. Bekannt sind beispielsweise Polydimethylsiloxane, Poly(methylphenyl)siloxane und Poly(dimethylsiloxan/diphenylsiloxan)-Copolymere.

Bevorzugt stehen die Reste R' in der Formel (3) unabhängig voneinander für Methyl-, Ethyl-oder Phenylreste. Besonders bevorzugt ist das Diorganopolysiloxan gemäß der Formel (3) ein Polydimethylsiloxan, ein Poly(methylphenyl)siloxan oder ein Dimethylsiloxan-Diphenylsiloxan-Copolymer, ganz besonders bevorzugt ein Polydimethylsiloxan. Die Formel (3) ist eine Strukturformel, gibt also auch die Verknüpfung der Siloxan-Einheiten untereinander wieder.

Das Polymer Pol1 weist bevorzugt ein zahlenmittleres Molekulargewicht Mₙ (gemäß der hierin beschriebenen Messmethode) von 40.000 bis 150.000 g/mol, stärker bevorzugt von 60.000 bis 90.000 g/mol, auf.

Ebenfalls bevorzugt weist das Polymer Pol1 eine Viskosität von 60 bis 90 Pa·s, besonders bevorzugt von 70 bis 90 Pa·s, auf (nach DIN 53019, Platte-Platte).

Bevorzugt ist das Polymer Pol2 ein Diorganopolysiloxan gemäß der Formel (4)

(OH)(R¹)₂Si-O-(SiR'₂-O)ₘ-Si(R¹)₂(OH) (4),

worin die Reste R' die bei der Formel (2) angegebene Bedeutung haben, m > 0 gilt und die Reste R¹ die Bedeutung gemäß der Formel (1) haben. Grundsätzlich können die Reste R' in allen denkbaren und chemisch möglichen Konstellationen über das Diorganopolysiloxan verteilt sein. Bekannt sind beispielsweise Polydimethylsiloxane, Poly(methylphenyl)siloxane und Poly(dimethylsiloxan/diphenylsiloxan)-Copolymere.

Bevorzugt stehen die Reste R' in der Formel (4) unabhängig voneinander für Methyl-, Ethyl-oder Phenylreste. Besonders bevorzugt ist das Diorganopolysiloxan gemäß der Formel (4) ein Polydimethylsiloxan, ein Poly(methylphenyl)siloxan oder ein Dimethylsiloxan-Diphenylsiloxan-Copolymer, ganz besonders bevorzugt ein Polydimethylsiloxan. Die Formel (4) ist eine Strukturformel, gibt also auch die Verknüpfung der Siloxan-Einheiten untereinander wieder.

Das Polymer Pol2 weist bevorzugt ein gewichtsmittleres Molekulargewicht M_{w} von 40.000 bis 100.000 g/mol, stärker bevorzugt von 55.000 bis 85.000 g/mol, auf.

Ebenfalls bevorzugt weist das Polymer Pol2 eine Viskosität von 5 bis 40 Pa·s, besonders bevorzugt von 10 bis 30 Pa·s.

Grundsätzlich können die Polymere Pol1 und Pol2 aus den gleichen oder aus voneinander verschiedenen Monomeren aufgebaut sein. Bevorzugt ist das Polymer Pol2 aus den gleichen Monomeren wie das Polymer Pol1 aufgebaut, wenngleich Anzahl der Wiederholungseinheiten und demzufolge das Molekulargewicht abweichen können.

Die Zusammensetzung enthält mindestens ein Organosilan oder Organooligosiloxan mit mindestens drei Si-gebundenen, mit Wasser abspaltbaren Gruppen. Bevorzugt wird ein Organosilan eingesetzt, besonders bevorzugt ist dieses ausgewählt aus der Gruppe bestehend aus Vinyltrimethoxysilan (VTMO), Vinyltriethoxysilan (VTEO), Methyltrimethoxysilan (MTMO), Methyltriethoxysilan (MTEO), Tetraethylorthosilikat (TEOS), Tetramethylorthosilikat (TMOS), Methyltris(methylethylketoxim)silan, Tetra(Methylethylketoxim)silan, Vinyltris(methylethylketoxim)silan, Methyltris(methylisobutylketoxim)silan, Vinyltris(methylisobutylketoxim)silan und Tetra(Methylisobutylketoxim)silan.

In der zu mischenden Zusammensetzung liegt das Polymer Pol1 bzw. liegt die Gesamtheit aller Polymere Pol1 bevorzugt zu 10 bis 50 Gew.-%, stärker bevorzugt zu 20 bis 40 Gew.-%, jeweils bezogen auf das Gesamtgewicht der Zusammensetzung, vor.

Das Polymer Pol 2 bzw. die Gesamtheit aller Polymere Pol2 liegt in der zu mischenden Zusammensetzung bevorzugt zu 5 bis 30 Gew.-%, stärker bevorzugt zu 8 bis 20 Gew.-%, jeweils bezogen auf das Gesamtgewicht der Zusammensetzung, vor.

Bevorzugt beträgt das Gewichtsverhältnis der Gesamtheit aller Polymere Pol1 zur Gesamtheit aller Polymere Pol2 5:1 bis 10:1.

Das Organosilan oder Organooligosiloxan bzw. die Gesamtheit aller Organosilane und Organooligosiloxane mit jeweils mindestens drei Si-gebundenen, mit Wasser abspaltbaren Gruppen liegt in der zu mischenden Zusammensetzung bevorzugt zu 0,5 bis 8 Gew.-%, stärker bevorzugt zu 1 bis 5 Gew.-%, jeweils bezogen auf das Gesamtgewicht der Zusammensetzung, vor.

Das Mischen der Zusammensetzung erfolgt bevorzugt unter Ausschluss von Luftfeuchtigkeit.

Die erfindungsgemäße Polymermasse und die zu mischende Zusammensetzung umfassen jeweils mindestens einen Kondensationskatalysator.

Der Kondensationskatalysator ist bevorzugt ausgewählt aus der Gruppe bestehend aus Zinn-, Titan-, Zink-, Zirkon-, Phosphor- und Bismuthverbindungen; insbesondere ausgewählt aus der Gruppe bestehend aus Organozinn-, Organotitan-, Organozink-, Organozirkon-, Organophosphor- und Organobismuthverbindungen.

Die Gesamtheit aller Kondensationskatalysatoren ist in der erfindungsgemäßen Polymermasse bzw. in der zu mischenden Zusammensetzung bevorzugt zu 0,05 bis 5 Gew.-%, besonders bevorzugt zu 0,08 bis 1 Gew.-%, jeweils bezogen auf das Gesamtgewicht der Zusammensetzung, enthalten.

Die erfindungsgemäße Polymermasse sowie die zu mischende Zusammensetzung umfasst bevorzugt mindestens einen Füllstoff. Besonders bevorzugt ist der Füllstoff ausgewählt aus der Gruppe bestehend aus CaCO₃, pyrogener Kieselsäure, gefällter Kieselsäure, Al(OH)₃ und BN. Grundsätzlich können alle aufgeführten Füllstoffe Oberflächen-hydrophobisiert sein, insbesondere mit Fettsäuren, z.B. Stearinsäure. Die Gesamtheit aller Füllstoffe ist in der erfindungsgemäßen Polymermasse bzw. in der zu mischenden Zusammensetzung bevorzugt zu 20 bis 80 Gew.-%, besonders bevorzugt zu 30 bis 60 Gew.-%, jeweils bezogen auf das Gesamtgewicht der Zusammensetzung, enthalten.

In einer Ausführungsform umfasst die erfindungsgemäße Polymermasse mindestens eine Kreide. Die Kreide kann funktionalisiert oder unfunktionalisiert sein, es können eine oder mehrere Kreiden enthalten sein. Bevorzugt ist Kreide in der erfindungsgemäßen Polymermasse zu insgesamt maximal 60 Gew.-%, bezogen auf das Gesamtgewicht der Polymermasse, enthalten, insbesondere 20 bis 55 Gew.-%.

Die erfindungsgemäße Polymermasse sowie die zu mischende Zusammensetzung können einen oder mehrere Haftvermittler (adhesion promoter) umfassen. Sofern umfasst, ist der Haftvermittler bevorzugt ausgewählt aus Aminopropyltrialkoxysilanen und Glycidyloxypropyltrialkoxysilanen; besonders bevorzugt ist er ausgewählt aus Aminopropyltriethoxysilan (AMEO) und Glycidyloxypropyltriethoxysilan (GLYEO). Die Gesamtheit aller Haftvermittler ist in der erfindungsgemäßen Polymermasse bzw. in der zu mischenden Zusammensetzung bevorzugt zu 0,1 bis 2 Gew.-%, besonders bevorzugt zu 0,5 bis 1,5 Gew.-%, jeweils bezogen auf das Gesamtgewicht der Zusammensetzung, enthalten.

Die erfindungsgemäße Polymermasse kann einen oder mehrere Weichmacher umfassen. Sofern umfasst, ist der Weichmacher bevorzugt ein Trimethylsilyl-terminiertes Polydiorganosiloxan oder ein Gemisch von Trimethylsilyl-terminierten Polydiorganosiloxanen mit verschiedenen Kettenlängen; besonders bevorzugt ist er ein Trimethylsilyl-terminiertes PDMS oder ein Gemisch von Trimethylsilyl-terminierten PDMS mit verschiedenen Kettenlängen.

Ein weiterer Gegenstand der Erfindung ist die Verwendung einer erfindungsgemäßen Polymermasse zur Herstellung von permanenten Verklebungen, bevorzugt von strukturellen Verklebungen, insbesondere zur Verbindung von Komponenten in elektronischen Geräten, in Bauanwendungen, im Flugzeugbau und/oder im Automobilbau. Besonders bevorzugt wird die erfindungsgemäße Polymermasse zur Herstellung von Verklebungen, insbesondere von strukturellen Verklebungen, bei Verglasungen verwendet, insbesondere bei Structural Glacing-Verfahren.

Ein weiterer Gegenstand der Erfindung ist die Verwendung einer erfindungsgemäßen Polymermasse zur Herstellung eines Klebebands, bevorzugt zur Herstellung eines Klebebands zur Ausbildung struktureller Verklebungen.

### Beispiele

### Herstellung einer dimensionsstabilen, reaktiven Silikonklebmasse:

In einem Rührer wurden unter Ausschluss von Luftfeuchtigkeit die in Tabelle 1 aufgeführten Komponenten in den dort angegebenen Anteilen gemischt. Hierzu wurden zunächst das Polymer und die Pigmentpaste vorgelegt. Die Mischung wurde langsam auf 45 - 55 °C erwärmt und der Mischraum evakuiert. Unter Schutzgas wurden dann Methyltri(methylethylketoxim)silan, Tetraethylorthosilikat und Aminopropyltriethoxysilan zugegeben und eingemischt. Anschließend wurde unter Schutzgas Vinyltri(methylethylketoxim)silan zugegeben. Im nächsten Schritt wurden die Kreiden portionsweise unter Schutzgas zugegeben. Im letzten Schritt wurde Dibutylzinndilaurat unter Schutzgas eingemischt und die Mischung unter Ausschluss von Luft in Kartuschen abgefüllt.

**Tabelle 1: Zusammensetzung der Mischung zur Herstellung der Silikonklebmasse**

| | |
|---|---|
| Beidseitig hydroxyterminiertes Polydimethylsiloxan (PDMS) (Mw = 100.000 g/mol, η = 80 Pa·s) | 31,62% |
| Methyltri(methylethylketoxim)silan | 2,91% |
| Tetraethylorthosilikat | 0,45% |
| Vinyltri(methylethylketoxim)silan | 1,04% |
| Aminopropyltriethoxysilan | 1,29% |
| Pigment (Ruß dispergiert in PDMS-ÖI, Wacker ELASTOSIL Farbpaste 9005 schwarz) | 5,25% |
| unbehandelte Kreide | 44,67% |
| mit Fettsäure behandelte Kreide | 12,76% |
| Dibutylzinndilaurat | 0,01% |

Die so hergestellte Mischung (nachfolgend als M1 bezeichnet) wurde unter weiterem Ausschluss von Luftfeuchtigkeit mit einem beidseitig hydroxyterminierten PDMS (Mw = 70.000 g/mol, η = 20 Pa·s) im Gewichtsverhältnis M1 : PDMS von 7,5:1 gemischt und nach 6 Stunden zu einer Bahn mit einer bei den nachstehenden Messungen jeweils angegebenen Schichtdicke (nachstehend auch als "Schichtkörper" bezeichnet) ausgeformt. Die aus der hier beschriebenen Abmischung der Masse M1 mit dem weiteren PDMS resultierende, zur Bahn auszuformende Masse wird nachfolgend als M2 bezeichnet.

### Gelpermeationschromatographie (GPC):

Mittels GPC können die zahlen- und gewichtsmittleren Molekulargewichte (Mₙ und M_{w}) der eingesetzten Organopolysiloxane und Silikonharze bestimmt werden. Für die Bestimmung wurden folgende Einstellungen verwendet: Eluent Toluol; Messtemperatur 23°C; Vorsäule PSS-SDV, 5 µm, 10² Å (10 nm), ID 8,0 mm x 50 mm; Auftrennung: Säulen PSS-SDV, 5 µm, 10² Å (10 nm), sowie 10³ Å (100 nm), und 10⁶ Å (10⁵ nm), mit jeweils ID 8,0 mm x 300 mm; Probenkonzentration 3 g/l, Durchflussmenge 1,0 ml pro Minute; Polydimethylsiloxan-Standard (14-Punkt-Kalibrierung im MPeak-Bereich von 400 bis 2.300.000 g/mol).

### Dimensionsstabilität:

### Beispiel Dim1

Die wie vorstehend beschrieben hergestellte Masse M2 wurde auf einer 120 µm dicken HDPE-Folie in zwei 10 x 20 cm-Rahmen zu zwei Schichtkörpern von je 1 mm Dicke geformt. Die Rahmen wurden entfernt und die Schichtkörper mit einer weiteren 120 µm-HDPE-Folie abgedeckt. Der so entstandene Verbund wurde jeweils zusammen mit einem Silica-Trocknungsmedium in einen feuchtigkeitsdichten Aluminium/PE-Verbundbeutel luftdicht eingeschweißt und bei Raumtemperatur gelagert.

Nach zwei Tagen wurde der erste Schichtkörper aus dem Aluminium/PE-Verbundbeutel geholt, nach 7 Tagen der zweite. Von beiden Schichtkörpern ließen sich die HDPE-Folien rückstandfrei abziehen.

### Vergleichsbeispiel Dim2

Es wurde analog zu Beispiel Dim1 ein 1 mm dicker Schichtkörper aus der Mischung M1 hergestellt und ohne Zugabe eines hydroxyterminierten PDMS, ansonsten aber analog zu Beispiel Dim1 zusammen mit dem Trocknungsmedium in einen feuchtigkeitsdichten Aluminium/PE-Verbundbeutel luftdicht eingeschweißt.

Nach zwei Tagen wurde der erste Schichtkörper aus dem Aluminium/PE-Verbundbeutel geholt, nach 7 Tagen der zweite. Beide Schichtkörper wurden beim Abziehen der Folie in sich (kohäsiv) gespalten.

### T-Block-Test:

Aus der Masse M2 wurde wie in Beispiel Dim1 beschrieben ein Schichtkörper mit zwei äußeren HDPE-Folien hergestellt, der zusammen mit einem Trocknungsmedium in einen feuchtigkeitsdichten Aluminium/PE-Verbundbeutel luftdicht eingeschweißt wurde. Nach 2 Tagen wurde der Schichtkörper aus dem Aluminium/PE-Verbundbeutel geholt. Nach dem Abziehen der Folien wurde der Schichtkörper folgendem Test unterzogen:
Zwei Aluminiumprofile in T-Form (25 x 25 x 2 mm, 25 mm) wurden mit Aceton gereinigt, woraufhin das Lösemittel 10 min abdampfen konnte. Der Schichtkörper wurde zu quadratischen Abschnitten mit einer Kantenlänge von 25 mm zugeschnitten. Anschließend wurden die Aluminiumprofile mit jeweils einem Schichtkörper verklebt und für 15 s mit der Hand verpresst. Der so hergestellte Prüfling wurde dann für den in Tabelle 2 angegebenen Zeitraum bei 23 °C und 50 % relativer Luftfeuchtigkeit äquilibriert. Anschließend wurde der Prüfling in eine Zugprüfmaschine der Firma ZWICK eingespannt, woraufhin die beiden T-Blöcke mit einer Geschwindigkeit von 50 mm/min auseinandergezogen wurden. Die dazu benötigte Maximalkraft wurde gemessen, als Ergebnis wird in Tabelle 2 der Mittelwert aus zwei Einzelmessungen in kPa angegeben.

**Tabelle 2: Ergebnisse des T-Block-Tests**

| Lagerzeit bei Normklima | Maximalkraft [kPa] |
|---|---|
| 1 Woche | 522 |
| 2 Wochen | 765 |
| 4 Wochen | 880 |

Die mit längerer Lagerung zum Trennen der T-Profile benötigte, zunehmende Kraft indiziert eine voranschreitende Erhöhung der Kohäsion der Masse unter Feuchtigkeitseinfluss und somit die Reaktivität der erfindungsgemäßen dimensionsstabilen Silikonklebmasse.

Die Masse M1 ließ sich überhaupt nicht als zur Verklebung der T-Profile verwendeter Schichtkörper in diesen Test einbringen, da sie nicht dimensionsstabil war und zwischen den Profilen zerlief. Eine sinnvolle Durchführung des Tests war damit nicht möglich.

### Rheologische Messungen:

Die rheologischen Parameter der zu untersuchenden Massen wurden an einem Rubber Process Analyzer RPA2000 der Fa. Alpha bestimmt. Die Messungen wurden für 10 Minuten bei 30 °C mit einer Frequenz von 10 rad/s und einer Auslenkung von 4% durchgeführt.

### Erfindungsgemäßes Beispiel

Analog Beispiel Dim1 wurden aus der Masse M2 zwei Schichtkörper von jeweils 2 mm Dicke zwischen zwei 50 µm-PET-Folien geformt. Einer dieser Schichtkörper wurde zusammen mit einem Silica-Trocknungsmedium in einen feuchtigkeitsdichten Aluminium/PE-Verbundbeutel eingeschweißt und darin zwei Tage bei Raumtemperatur gelagert. Der zweite Schichtkörper wurde zur vollständigen Aushärtung vier Wochen bei Normklima gelagert.

### Vergleichsbeispiel

Als Vergleichsbeispiel wurden die rheologischen Parameter der Masse M1 bestimmt.

Auch von dieser Masse wurden analog Dim1 zwei Schichtkörper von jeweils 2 mm Dicke zwischen zwei PET-Folien geformt und wie vorstehend beschrieben verpackt bzw. gelagert.

**Tabelle 3: Ergebnisse der rheologischen Untersuchungen**

| Parameter | Bedingungen | M2 | M1 (Vgl.) |
|---|---|---|---|
| Komplexe Viskosität [Pa·s] | 2 Tage eingeschweißt | 1.680 | 700 |
| | Nach 4 Wochen Normklima | 36.320 | 42.650 |
| Verlustfaktor (tanD) | 2 Tage eingeschweißt | 0,77 | 1,42 |
| | Nach 4 Wochen Normklima | 0,19 | 0,24 |

Die ermittelten rheologischen Parameter gemäß 3 zeigen, dass die Viskosität der erfindungsgemäßen Silikonklebmasse bei Lagerung unter Lufteinfluss ansteigt. Der Verlustfaktor beträgt < 1 und sinkt unter dem Einfluss von Luftfeuchtigkeit weiter. Die erfindungsgemäße Masse ähnelt in ihrem Verhalten somit eher einem elastischen Körper als einer Flüssigkeit.

Die Viskosität der Masse M1 im Vergleichsbeispiel steigt bei Lagerung unter Lufteinfluss ebenfalls weiter an. Der Verlustfaktor liegt unter Ausschluss von Luftfeuchtigkeit deutlich über 1 und sinkt erst nach Feuchtigkeitsexposition unter 1. Die Masse M1 ähnelt in ihrem Verhalten unter Ausschluss von Luftfeuchtigkeit und anfänglich nach einer derartigen Lagerung somit eher einer Flüssigkeit als einem elastischen Körper.

## Patentansprüche

1. Chemisch vorvernetzte und mit Feuchtigkeit weiter vernetzbare, autohäsive Polymermasse zur Verwendung als auf ein Substrat applizierbarer Schichtkörper, wobei die Polymermasse mindestens ein Polymer mit mindestens zwei terminalen Silylgruppen gemäß der Formel (1)
Si(R¹)ₐ(R²)_{b} (1),
worin
die Reste R¹ voneinander unabhängig für eine Alkyl-, Alkenyl- oder Arylgruppe oder für ein Wasserstoffatom stehen,
die Reste R² für eine mit Wasser abspaltbare Gruppe stehen und
b = 1, 2 oder 3 und a = 3 - b ist;
und mindestens einen Kondensationskatalysator
umfasst.

2. Polymermasse gemäß Anspruch 1, **dadurch gekennzeichnet, dass** die Reste R² gemäß der Formel (1) ausgewählt sind aus der Gruppe bestehend aus Alkoxy-, Acyloxy-, Amino-, Enoxy- und Ketoximgruppen.

3. Polymermasse gemäß einem der vorstehenden Ansprüche, erhältlich durch Mischen einer Zusammensetzung umfassend:
- mindestens ein Polymer Pol1,
dessen Termini voneinander unabhängig jeweils von einer Silylgruppe gemäß der Formel (1) gebildet werden,
- mindestens ein Polymer Pol2,
das mindestens zwei terminale, Si-gebundene OH-Gruppen aufweist;
- mindestens ein Organosilan und/oder mindestens ein Organooligosiloxan,
jeweils enthaltend mindestens drei Si-gebundene, mit Wasser abspaltbare Gruppen; und
- mindestens einem Kondensationskatalysator.

4. Polymermasse gemäß Anspruch 3, **dadurch gekennzeichnet, dass** die Gesamtheit aller Polymere Pol1 in der Zusammensetzung zu 10 bis 50 Gew.-%, bezogen auf das Gesamtgewicht der Zusammensetzung, vorliegt.

5. Polymermasse gemäß einem der Ansprüche 3 und 4, **dadurch gekennzeichnet, dass** die Gesamtheit aller Polymere Pol2 in der Zusammensetzung zu 5 bis 30 Gew.-%, bezogen auf das Gesamtgewicht der Zusammensetzung, vorliegt.

6. Polymermasse gemäß einem der vorstehenden Ansprüche, **dadurch gekennzeichnet, dass** der Kondensationskatalysator ausgewählt ist aus der Gruppe bestehend aus Zinn-, Titan-, Zink-, Zirkon-, Phosphor- und Bismuthverbindungen.

7. Verwendung einer Polymermasse gemäß einem der Ansprüche 1 bis 6 zur Herstellung von permanenten Verklebungen.
